# EUROPÄISCHE PATENTANMELDUNG

(11) **EP 0 911 457 A2**
(43) Veröffentlichungstag der Anmeldung: **28.04.1999**
(21) Anmeldenummer: 98102063.9
(22) Anmeldetag: 06.02.1998
(51) Int. Cl.: E04C 1/39

(54) **Plattenförmiger Palisaden/Mauerstein**

(30) Priorität: 20.10.1997 DE 19746295
(71) Anmelder: FIEGE & BERTOLI GmbH & Co. KG., D-41541 Dormagen (DE)
(72) Erfinder: Schneider, Horst, 47533 Kleve (DE)
(74) Vertreter: Patentanwälte Hauck, Graalfs, Wehnert, Döring, Siemons

(57) **Zusammenfassung**

Es wird ein plattenförmiger Palisaden/Mauerstein (1) beschrieben, der in Aufrechtstellung des Steines zwei schmale Stirnflächen (3,4), zwei breite Seitenflächen (2) und eine Boden- (11) und Deckfläche (10) aufweist. Eine Stirnfläche (3) ist im Horizontalschnitt konvex gekrümmt, während die andere (4) im Horizontalschnitt konkav gekrümmt ausgebildet ist. Mindestens eine Seitenfläche (2) ist in Abständen mit vertikalen leistenförmigen Erweiterungen (6) versehen, zwischen denen zur Aufnahme der Erweiterungen eines anderen Steines geeignete Vertiefungen (7) angeordnet sind. Die Erweiterungen (6) sind abwechselnd im Horizontalschnitt konvex gekrümmt und trapezförmig ausgebildet. Hiermit wird ein Palisadenstein geschaffen, der gleichzeitig als Mauerstein mit gutem Verbundeffekt verwendbar ist.

## Beschreibung

Die vorliegende Erfindung betrifft einen plattenförmigen Palisaden/Mauerstein mit in Aufrechtstellung des Steines zwei schmalen Stirnflächen, zwei breiten Seitenflächen und einer Boden- und Deckfläche.

Es sind plattenförmige Palisadensteine bekannt, die einer Reihe von einzelnen aneinandergesetzten Rundpalisadensteinen entsprechen, jedoch eine zusammenhängende Einheit bilden. Die bekannten Rundpalisadensteine sind so ausgebildet, daß sie einen kreisförmigen Querschnitt besitzen, der eine konkav gekrümmte Ausnehmung besitzt, deren Krümmung der Krümmung der konvex gekrümmten übrigen Oberfläche des Steines entspricht. Beim Aneinandersetzen der Rundpalisadensteine wird somit ein Stein formschlüssig in die konkave Ausnehmung des Nachbarsteines eingepaßt. Auf diese Weise können mehrere Steine aneinandergesetzt werden, wobei ein entsprechender Verbund- bzw. Verzahnungseffekt entsteht.

Der bekannte plattenförmige Palisadenstein ist genauso ausgebildet wie eine derartige Reihe von aneinandergesetzten Rundpalisadensteinen. Er weist daher im Horizontalschnitt eine Form auf, bei der mehrere Kreisabschnitte aneinandergesetzt sind, wobei zwischen benachbarten Kreisabschnitten jeweils eine Vertiefung vorhanden ist, die in Form einer Kerbe ausgebildet ist.

Derartige Steine werden als Palisadensteine, d.h. im aufrechtstehenden Zustand, verwendet. Wenn die Steine liegend übereinandergestapelt werden, greifen zwar die konvex gekrümmten Oberflächenabschnitte des einen Steines etwas in die kerbenförmigen Vertiefungen des anderen Steines ein, jedoch wird keine gute Verbundwirkung erzielt, da der Eingriff nur geringfügig ist. Im übrigen ist eine Verwendung von derartigen Palisadensteinen im liegenden Zustand nicht vorgesehen und kann allenfalls zu Lager- bzw. Transportzwecken erfolgen.

Der Erfindung liegt die Aufgabe zugrunde, einen Palisadenstein zu schaffen, der gleichzeitig als Mauerstein mit gutem Verbundeffekt verwendbar ist.

Diese Aufgabe wird erfindungsgemäß durch einen plattenförmigen Palisadenstein der angegebenen Art gelöst, der durch die folgenden Merkmale gekennzeichnet ist:
a. Eine Stirnfläche ist im Horizontalschnitt konvex gekrümmt und eine im Horizontalschnitt konkav gekrümmt ausgebildet, wobei sich die Krümmungen entsprechen;
b. die Seitenflächen sind in Abständen mit vertikalen leistenförmigen Erweiterungen versehen, zwischen denen zur Aufnahme der Erweiterungen eines anderen Steines geeignete Vertiefungen angeordnet sind; und
c. die Erweiterungen sind abwechselnd im Horizontalschnitt konvex gekrümmt und trapezförmig ausgebildet.

Der erfindungsgemäß ausgebildete Stein ist sowohl als senkrecht stehender Palisadenstein als auch als liegender Mauerstein verwendbar. Ein wesentliches Merkmal der Erfindung besteht darin, daß die vertikalen leistenförmigen Erweiterungen auf der mindestens einen Seitenfläche, die zur strukturellen Ausgestaltung des Palisadensteines dienen, um die glatte Seitenfläche profilmäßig aufzugliedern, gleichzeitig die Aufgabe haben, bei einer Verwendung des Steines in liegender Stellung als Mauerstein für eine entsprechende Verbundwirkung mit einem darüber bzw. darunter angeordneten Stein zu sorgen, wobei sie in die Vertiefungen des Nachbarsteines eindringen, so daß ein Verzahnungseffekt zwischen übereinanderangeordneten Steinen entsteht, der eine Verschiebung der Steine in Horizontalrichtung senkrecht zur Achse der leistenförmigen Erweiterungen unmöglich macht.

Erfindungsgemäß sind hierbei abwechselnd im Horizontalschnitt konvex gekrümmt und trapezförmig ausgebildete Erweiterungen vorgesehen. Damit wird erreicht, daß über die trapezförmig ausgebildeten Erweiterungen eine formschlüssige Anlage von übereinandergelegten Steinen erreicht wird und über die konvex gekrümmten Erweiterungen bei der Verwendung des Steines als Palisadenstein entsprechende Anschlußmöglichkeiten von weiteren Palisadensteinen winklig hierzu erzielt werden. Der Anschluß erfolgt hierbei über die im Horizontalschnitt konkav gekrümmt ausgebildete Stirnfläche des benachbarten Steines, die in Anlage mit einer konvex gekrümmten Erweiterung des Ausgangssteines tritt. Jede konvex gekrümmte Erweiterung bietet somit eine solche Anschlußmöglichkeit, während die jeweils zwischen den konvex gekrümmten Erweiterungen angeordneten trapezförmigen Erweiterungen für den Formschluß von übereinandergelegten Steinen bei einer Verwendung als liegender Mauerstein sorgen.

Es versteht sich, daß beim Übereinanderlegen von Steinen die im Horizontalschnitt konvex gekrümmt und trapezförmig ausgebildeten Erweiterungen des einen Steines immer in Vertiefungen des anderen Steines dringen, die zwischen einer konvex gekrümmten und einer trapezförmigen Erweiterung vorhanden sind. Die seitlichen Begrenzungsflächen der Vertiefungen sind daher einerseits konvex gekrümmt und andererseits Schrägflächen der jeweiligen trapezförmigen Abschnitte. Dringt eine trapezförmige Erweiterung in eine derartige Vertiefung ein, so ergibt sich naturgemäß ein echter Formschluß nur zwischen den schrägen Seitenflächen und der ebenen Bodenfläche bzw. Stirnfläche, während die andere schräge Seitenfläche nur in einen Linienkontakt mit der zugehörigen konvex gekrümmten Fläche tritt.

Dringt eine konvex gekrümmte Erweiterung in eine derartige Vertiefung ein, so ergibt sich streng genommen nur ein dreifacher Linienkontakt an der konvex gekrümmten Seitenfläche, an der ebenen Bodenfläche und der schrägen Seitenfläche der Vertiefung. Es entsteht somit in diesem Bereich kein flächiger Kontakt. Da jedoch jeder konvex gekrümmten Erweiterung eine trapezförmige Erweiterung folgt, wird insgesamt eine gute Verbundwirkung bzw. Verzahnungswirkung erzielt.

Vorzugsweise ist benachbart zur konvex gekrümmten Stirnfläche auf jeder Seitenfläche eine konvex gekrümmte Erweiterung vorgesehen, so daß sich insgesamt ein abgerundeter Endbereich des Steines ergibt, der sich jedoch gegenüber dem einer Rundpalisade dadurch unterscheidet, daß er sich aus drei konvexen Abschnitten zusammensetzt, die unter Bildung einer Vertiefung ineinander übergehen.

In Weiterbildung der Erfindung weist die konkav gekrümmte Stirnfläche des Steines seitlich von ihrem konkaven Abschnitt je einen streifenförmigen ebenen Abschnitt auf. Diese beiden ebenen Abschnitte können senkrecht zur Seitenflächenebene des Steines verlaufen und damit Stellflächen für den Stein bilden. Sie können jedoch auch etwa in Anpassung an die Krümmung der konvex gekrümmten Erweiterungen ausgebildet sein, so daß sie beim Aneinandersetzen von zwei Palisadensteinen formschlüssig hiermit in Eingriff treten. Wenn die ebenen Abschnitte senkrecht zur Seitenflächenebene verlaufen, können sie beim rechtwinkligen Aneinandersetzen von zwei Palisadensteinen mit dem ebenen Boden der Vertiefungen der Seitenfläche in Anlage treten.

Im übrigen weisen alle Vertiefungen des Steines einen ebenen Boden auf, der der Ebene der jeweiligen Seitenfläche entspricht.

Vorzugsweise entsprechen sich die Krümmungen der konvex und konkav gekrümmten Stirnflächen und der konvex gekrümmten Erweiterungen, so daß bei einer Verwendung als Palisadenstein sowohl bei einem linearen als auch bei einem rechtwinkligen Anbau ein formschlüssiger Kontakt gegeben ist.

Bei einer bevorzugten Ausführungsform der Erfindung besitzt der Palisaden/Mauerstein zwei konvex gekrümmte und zwei trapezförmige Erweiterungen auf einer Seitenfläche, denen vorzugsweise auf der anderen Seitenfläche entsprechende Erweiterungen gegenüberliegen.

Bei der Verwendung als Mauerstein in liegendem Zustand können die Steine beispielsweise in gleicher Orientierung übereinandergelegt werden, wobei die Erweiterungen des einen Steines in entsprechende Vertiefungen des anderen Steines greifen. Hierdurch ergibt sich beim Aufeinandersetzen von mehreren Steinen eine Wand mit geneigter Vorderfläche, da der obere Stein immer versetzt zum unteren Stein angeordnet ist. Die Mauersteine können jedoch auch so übereinandergesetzt werden, daß der jeweils obere Stein um 180° gegenüber dem jeweils unteren Stein gedreht ist. Bei dieser Anordnung lassen sich Mauern mit etwa vertikalen Vorderflächen bilden, wobei abwechselnd übereinander konkav gekrümmte und konvex gekrümmte Stirnflächen vorhanden sind. Natürlich lassen sich mit den erfindungsgemäß ausgebildeten Steinen auch Zwischenräume überbrücken, die beispielsweise zu Bepflanzungszwecken vorgesehen werden können.

Die Erfindung wird nachfolgend anhand eines Ausführungsbeispieles in Verbindung mit der beigefügten Zeichnung im einzelen erläutert. Es zeigen:
- Figur 1: eine räumliche Ansicht eines plattenförmigen Palisaden/Mauersteines;
- Figur 2: eine räumliche Ansicht von fünf aneinandergesetzten Palisaden/Mauersteinen der Figur 1;
- Figur 3: eine räumliche Ansicht von in liegender Anordnung aufeinandergesetzten Palisaden/Mauersteinen;
- Figur 4: eine räumliche Ansicht von in liegender Anordnung, jedoch um 180° versetzt aufeinandergesetzten Palisaden/Mauersteinen;
- Figur 5: eine Ansicht ähnlich Figur 4, wobei die Steine eine andere versetzte Lage einnehmen als in Figur 4; und
- Figur 6: eine räumliche Ansicht von in liegender Anordnung aufeinandergesetzten Palisaden/Mauersteinen mit dazwischen ausgebildeten Freiräumen.

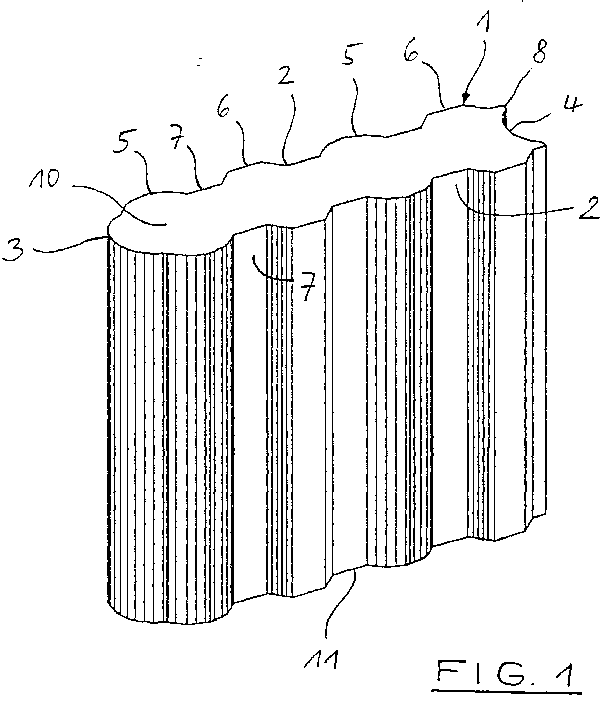

Der in Figur 1 gezeigte plattenförmige Palisaden/Mauerstein 1 besitzt in Aufrechtstellung des Steines, wie in Figur 1 gezeigt, zwei schmale Stirnflächen 3, 4, zwei breite Seitenflächen 2, eine Bodenfläche 11 und eine Deckfläche 10. Eine Stirnfläche 3 ist im Horizontal schnitt konvex gekrümmt, d.h. in räumlicher Ansicht zylindrisch ausgebildet, während die gegenüberliegende Stirnfläche 4 im Horizontalschnitt konkav gekrümmt, d.h. in räumlicher Ansicht ebenfalls zylindrisch ausgebildet ist. Die Krümmungen beider Stirnflächen sind identisch.

Die Bodenfläche 11 und Deckfläche 10 sind eben ausgebildet, so daß der Stein in aufrechter Stellung als Palisadenstein verwendet werden kann.

Beide Seitenflächen 2 sind in Abständen mit vertikalen leistenförmigen Erweiterungen versehen, zwischen denen zur Aufnahme der Erweiterungen von anderen Steinen geeignete Vertiefungen angeordnet sind. Die Erweiterungen 5, 6 sind abwechselnd im Horizontalschnitt konvex gekrümmt und trapezförmig ausgebildet, während die Vertiefungen 7 eine ebene Bodenfläche, die von der Ebene der Seitenfläche gebildet wird, eine geneigte Seitenfläche und eine gekrümmte Seitenfläche besitzen. Die eine geneigte Seitenfläche wird von einer Seitenfläche einer trapezförmigen Erweiterung gebildet, während die andere gekrümmte Seitenfläche von der konvex gekrümmten Erweiterung gebildet wird. Bei der hier dargestellten Ausführungsform sind zwei konvex gekrümmte Erweiterungen 5 und zwei trapezförmige Erweiterungen 6 vorgesehen, und zwar auf beiden Seiten des Steines, wobei sich entsprechende Erweiterungen und Vertiefungen gegenüberliegen. Angrenzend an die konvex gekrümmte Stirnfläche 3 sind zwei konvex gekrümmte Erweiterungen 5 vorgesehen, während angrenzend an die konkav gekrümmte Stirnfläche 4 zwei trapezförmige Erweiterungen 6 angeordnet sind.

Die konkav gekrümmte Stirnfläche 4 besitzt seitlich von ihrem konkaven Abschnitt je einen streifenförmigen ebenen Abschnitt 8, der sich senkrecht zur Ebene der Seitenfläche erstreckt. Diesem Abschnitt folgt die Bodenfläche einer Vertiefung 7 auf beiden Seitenflächen.

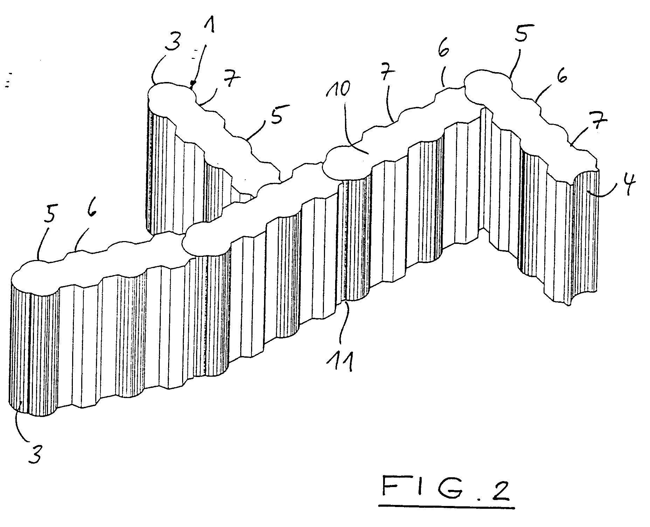

Figur 2 zeigt fünf aneinandergesetzte Palisaden/Mauersteine 1 bei deren Verwendung als Palisadenstein. Man erkennt, daß die Steine linear aneinandergesetzt werden können, jedoch auch winklig. Beim linearen Aneinandersetzen tritt die konkav gekrümmte Stirnfläche des einen Steines mit der konvex gekrümmten Stirnfläche des anderen Steines in Anlage. Hierbei können die Steine einen Winkel miteinander bilden, da der eine Stein relativ zum anderen infolge der gekrümmt ausgebildeten Anlageflächen verdreht werden kann. Dies ist bei dem in Figur 2 ganz links gezeigten Stein der Fall, während die nach rechts folgenden beiden Steine so aneinandergesetzt sind, daß sie eine gerade Linie bilden.

Ein weiterer Stein ist rechtwinklig an den zweiten Stein von links angesetzt, wobei dessen konkave Stirnfläche mit einer konvexen Erweiterung auf der Seitenfläche des anderen Steines in Anlage tritt. Der in Figur 2 ganz rechts dargestellte Stein ist rechtwinklig zum benachbarten Stein angeordnet, wobei ebenfalls eine konvex gekrümmte Erweiterung auf der Seitenfläche dieses Steines mit der konkav gekrümmten Stirnfläche des anderen Steines in Anlage tritt.

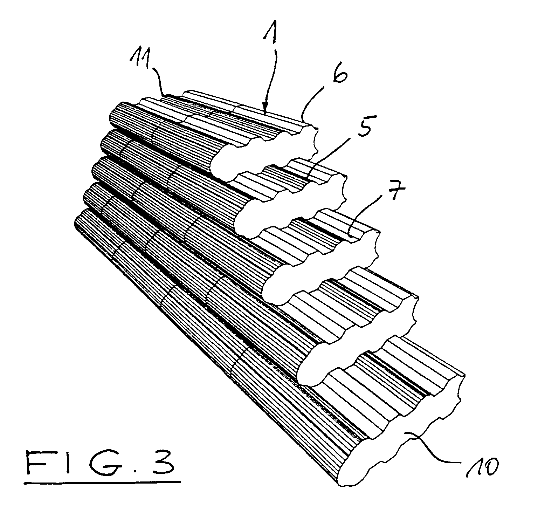

Figur 3 zeigt eine Verwendung des Palisaden/Mauersteines 1 in liegender Stellung als Mauerstein. Hierbei werden mehrere Steine in liegender Stellung aufeinandergesetzt, wobei die Erweiterungen 6, 7 und Vertiefungen 6 auf den benachbarten Seitenflächen aufeinandergesetzter Steine miteinander in Eingriff treten. Hierdurch wird eine entsprechende Verzahnung erreicht. Figur 3 zeigt fünf übereinandergesetzte Steinreihen, die eine Mauer mit schräger Vorderseite bilden, da die Steine versetzt übereinander angeordnet sind.

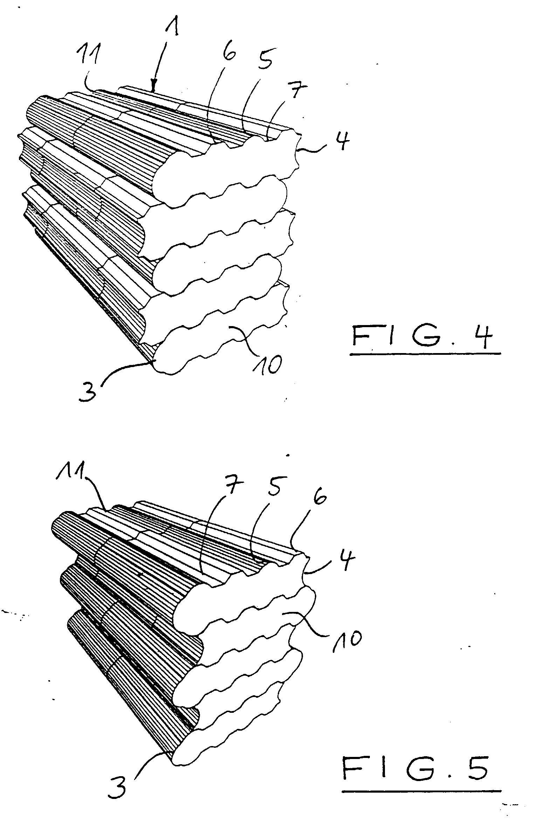

Die Figuren 4 und 5 zeigen ebenfalls die Verwendung des Palisaden/Mauersteines 1 als Mauerstein. Hierbei sind ebenfalls fünf Steinreihen übereinander angeordnet, wobei jedoch die Steine der zweiten und vierten Steinreihe von unten um 180° gedreht zu den anderen Steinen angeordnet sind. Bei dieser Ausführungsform wird daher die Vorderseite der Mauer abwechselnd von konvex gekrümmten und konkav gekrümmten Stirnflächen der Steine gebildet. Figur 5 zeigt eine entsprechende Anordnung wie Figur 4, wobei eine geringfügig gegenüber der Anordnung der Figur 4 versetzte Anordnung gewählt ist.

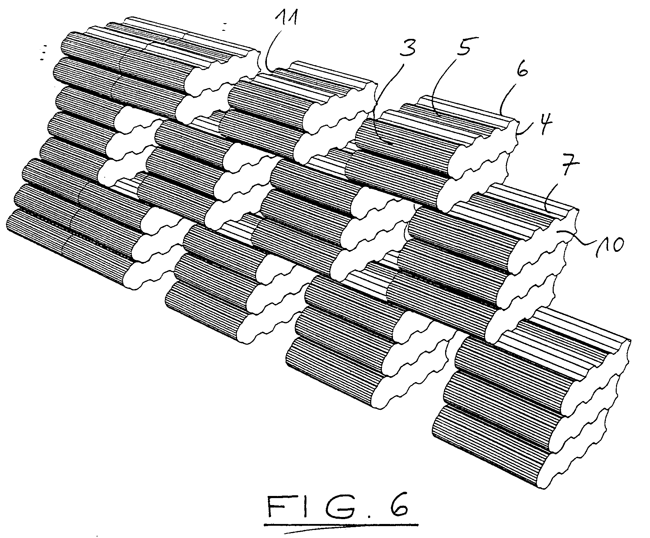

Figur 6 zeigt aufeinandergesetzte Mauersteine ähnlich Figur 3, wobei jedoch zwischen jeweils drei aufeinandergesetzten Steinen Lücken belassen sind, die von drei darüber angeordneten Steinen überbrückt werden. Die in dieser Mauer belassenen Lücken können beispielsweise bepflanzt werden.

## Patentansprüche

1. Plattenförmiger Palisaden/Mauerstein mit in Aufrechtstellung des Steines zwei schmalen Stirnflächen, zwei breiten Seitenflächen und einer Boden- und Deckfläche, gekennzeichnet durch die folgenden Merkmale:
a. Eine Stirnfläche (3) ist im Horizontalschnitt konvex gekrümmt und eine (4) im Horizontalschnitt konkav gekrümmt ausgebildet, wobei sich die Krümmungen entsprechen;
b. mindestens eine Seitenfläche ist in Abständen mit vertikalen leistenförmigen Erweiterungen (5, 6) versehen, zwischen denen zur Aufnahme der Erweiterungen (5, 6) eines anderen Steines geeignete Vertiefungen (7) angeordnet sind;
c. die Erweiterungen (5, 6) sind abwechselnd im Horizontalschnitt konvex gekrümmt und trapezförmig ausgebildet.

2. Palisaden/Mauerstein nach Anspruch 1, dadurch gekennzeichnet, daß die konkav gekrümmte Stirnfläche (4) seitlich von ihrem konkaven Abschnitt je einen streifenförmigen ebenen Abschnitt (8) aufweist.

3. Palisaden/Mauerstein nach Anspruch 1 oder 2, dadurch gekennzeichnet, daß sich an die konvex gekrümmte Stirnfläche (3) eine konvex gekrümmte Seitenflächenerhöhung (5) anschließt.

4. Palisaden/Mauerstein nach einem der vorangehenden Ansprüche, dadurch gekennzeichnet, daß sich die Krümmungen der konvex und konkav gekrümmten Stirnflächen (3, 4) und der konvex gekrümmten Erweiterungen (5) entsprechen.

5. Palisaden/Mauerstein nach einem der vorangehenden Ansprüche, dadurch gekennzeichnet, daß er zwei konvex gekrümmte und zwei trapezförmige Erweiterungen (5, 6) auf einer Seitenfläche (2) besitzt.

6. Palisaden/Mauerstein nach einem der vorangehenden Ansprüche, dadurch gekennzeichnet, daß sich auf beiden Seitenflächen (2) entsprechende Erweiterungen (5, 6) gegenüberliegen.
